# EUROPEAN PATENT SPECIFICATION

(11) **EP 4 123 151 B1**
(45) Date of publication and mention of the grant of the patent: **04.09.2024**
(21) Application number: 22184578.7
(22) Date of filing: 13.07.2022
(51) Int. Cl.: F02K 1/66, F02K 1/32

(54) **VARIABLE PITCH FAN THRUST REVERSER**
SCHUBUMKEHR BEI FAN MIT VARIABLEM ANSTELLWINKEL
INVERSEUR DE POUSSÉE DE SOUFFLANTE À CALAGE VARIABLE

(30) Priority: 20.07.2021 GR 20210100489; 07.09.2021 GB 202112678
(43) Date of publication of application: 25.01.2023
(73) Proprietor: Rolls-Royce plc, London N1 9FX (GB)
(72) Inventor: Pachidis, Vasileios, Derby, DE24 8BJ (GB); Rajendran, David, Derby, DE24 8BJ (GB)
(74) Representative: Rolls-Royce plc

(56) References cited:
- GB-A- 2 185 719
- US-A- 3 729 934
- US-A- 3 747 341
- US-A- 3 824 785

## Description

The present disclosure concerns a ducted gas turbine engine and in particular a ducted gas turbine engine comprising a Variable Pitch Fan (VPF) used to generate both forward and reverse thrust.

Variable Pitch Fans (VPF) in a turbofan engine may be actuated to change the fan aerofoil pitch setting and may be used to reverse the direction of airflow and generate reverse thrust. The amount of reverse thrust produced with the VPF depends on the reverse stream mass flow ingested from the engine exit and the subsequent development of the reverse flow in the engine external regions after it flows out through the engine inlet.

Improvement in the VPF reverse thrust levels may be achieved by increasing the reverse flow through the engine exit using techniques such as additional auxiliary intakes or increased exit nozzle area, both of which serve to increase the volume of the air flow, or the use of secondary air injection.

In GB2185719 a ducted fan gas turbine comprises a contra-rotating fan with an upstream array of fixed blades and a downstream array of variable blades. An annular cascade of vanes is uncovered by a translating cowl when thrust reversal is required and the cowl translation is coordinated with a change of pitch of the variable blades.

In US3747341 a variable pitch fan is provided with a translating cowl, or other variably sized opening which, when required, opens to provide an auxiliary inlet for thrust reversal air.

Whilst such modifications improve the VPF reverse flow behaviour in an isolated uninstalled engine at static conditions the results have been found to be different in the dynamic conditions experienced by the engine when the VPF is employed during landing. In particular, VPF reverse flow analysis in an engine installed to the airframe at dynamic conditions corresponding to aircraft landing speeds indicate that auxiliary inlet schematics are not effective in improving the reverse thrust behaviour at locations near the bypass nozzle exit and can impair the reverse thrust behaviour at locations near the VPF.

This is due, in part, to a consequence of the installed reverse thrust flow field at dynamic conditions where the auxiliary inlets located near the bypass exit do not act as additional inlets to admit more reverse flow into the engine but instead behave as alternative inlets through which the entire reverse flow develops. In addition they also block reverse flow from the engine exit through their impact on the pressure distribution along the axial length of the bypass.

Auxiliary inlets located further upstream also do not act as additional inlets but instead act as a diversionary escape opening for the reverse flow ingested from the bypass nozzle exit. This consequently prevents a large portion of the reverse flow from reaching the VPF passages and leads to a significant deterioration in the levels of reverse thrust achievable.

It is an object of the present disclosure to seek to provide an improved arrangement that addresses these and other matters.

According to a first aspect there is provided a ducted gas turbine engine comprising a fan and a guide vane downstream of the fan, wherein the fan is a Variable Pitch Fan (VPF) configured to operate in a first position for generating forward thrust and a second position for generating reverse thrust; wherein a duct wall positioned radially outside the Variable Pitch Fan comprises one or more vents extending through the duct wall, and wherein each vent is located forward of the guide vane; wherein the fan has an inlet area and the combined flow area of the vents is greater than 1 % but no more than 15% of the fan inlet area
The VPF may be provided by a plurality of aerofoils circumferentially arranged around an axis and each aerofoil has a leading edge, a trailing edge and a blade tip with an axial extent, wherein the vent has an opening in the duct wall that is located adjacent the tip of a blade.

The vent opening may be downstream of the aerofoils configured to operate in a first position for generating forward thrust and a second position for generating reverse thrust
The, or each, vent may have an opening at an axial location in the duct wall that corresponds with the axial extent of the blade tip.

The or each vent may have an opening in the duct wall that is axially positioned adjacent a leading edge of an aerofoil.

By adjacent it is meant that the respective parts, locations, vents, blades, leading edge, etc. at least partially overlap at the same axial location.
. The combined flow area of the vents may be of the order 2% of the fan inlet area. The combined flow area of the vents may be not more than 10% of the fan inlet area. The combined flow area of the vents may be not more than 7.5% of the fan inlet area. The combined flow area of the vents may be not more than 5% of the fan inlet area. The combined flow area of the vents may be not more than 2.5% of the fan inlet area.

The combined flow area is defined by the sum of the individual areas of the vent inlets in the duct wall

The or each vent may comprise an axially forward lean. The inlet of the vent located on a radially inner surface of the duct wall may be axially rearward of an outlet of the vent located on a radially outer surface of the duct wall. The axis against which the position of the vent is defined may be the axis of the engine.

The inlet of the vent located on a radially inner surface of the duct wall may at the same axial position but radially spaced from an outlet of the vent located on a radially outer surface of the duct wall. The radial direction against which the position of the vent is defined may be radial direction from the axis of the engine.

The duct wall may comprise additional structural, or functional apparatus such as impact absorption material, noise absorption material, blade-off capture structure, and/or ice-reduction apparatus.

The, or each, vent may have a circumferential lean. The circumferential position of the inlet of the vent located on a radially inner surface of the duct wall may be at a different circumferential position of an outlet of the vent located on a radially outer surface of the duct wall.

The circumferential position of the inlet of the vent located on a radially inner surface of the duct wall may be at the same circumferential position of an outlet of the vent located on a radially outer surface of the duct wall.

The choice of axial and circumferential angle of the vent may be selected to deliver a desired reverse thrust flow and/or structural requirements.

The, or each, vent may comprises at least one valve member that is configured to move from an open position when the engine operates in thrust reverse mode and a closed position when the engine does not operate in thrust reverse mode.

The at least one valve member may be located at a radially inner surface of the duct wall.

The at least one valve member may be located at a radially outer surface of the duct wall.

Any suitable actuation system, depending on the sizing, weight and packing requirements may be provided to open and close the valves of the vent.

The number of discrete auxiliary vents may be optimized from aerodynamic, structural and actuation requirements.

The circumferential spacing of the vent inlets and / or vent outlets may vary around the circumference of the engine. The circumferential location may be selected to occupy a part of the circumference, if required, to generate stabilizing moments to counteract the effect of undesirable lateral force on the aircraft.

The, or each, vent may comprise a flow conditioning element such as a vane or tortuous path to affect the flow leaving the vent. The magnitude of the circumferential component of the air flow leaving the vent may be less than the magnitude of the circumferential component of the air flow entering the vent.

The vent inlet and the vent outlet may be separated by an annular channel and arranged that one or more vent inlets may deliver air to the annular channel and one or more vent outlets may take air from the annular channel. The number of vent inlets may be different from the number of vent outlets.

The vent inlets may be defined as a perforated wall. The vent outlets may be defined as a perforated wall.

The annular chamber may be provided with a honeycomb or hexagonal structure.

Embodiments will now be described by way of example only, with reference to the Figures, in which:
**Figure 1** is a sectional side view of a gas turbine engine;
**Figure 2** is a known mechanical arrangement for a geared fan gas turbine engine.
**Figure 3** is an arrangement for an epicyclic gearbox for a geared fan gas turbine engine.
**Figure 4** is a schematic of a gas turbine having a VPF and a channel at the fan tip to increase thrust reverse capability.
**Figure 5** is a cross-section through the gas turbine of Figure 4.
**Figure 6** is an enlarged view of a channel detailed in the gas turbine of Figure 4.
**Figure 7** is an enlarged view of the channel detailed in the cross-section of Figure 5.
**Figure 8** is a schematic of the thrust reverser flows generated by a VPF in a conventional gas turbine.
**Figure 9** is a schematic of the thrust reverser flows generated by a VPF in the gas turbine of Figures 4 to 7.
**Figure 10** is a schematic of a thrust reverser flows in a further embodiment of the gas turbine.
**Figure 11** depicts the thrust reverser flows in an embodiment of the engine not forming part of the invention.

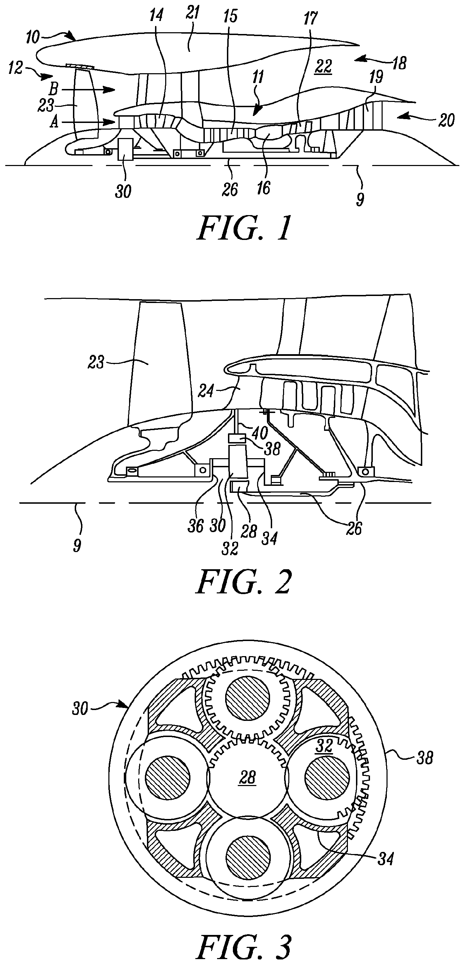

Figure 1 illustrates a gas turbine engine 10 having a principal rotational axis 9. The engine 10 comprises an air intake 12 and a propulsive fan 23 that generates two airflows A and B. The gas turbine engine 10 comprises a core engine 11 having, in axial flow A, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines, in axial flow B, a bypass duct 22 and a bypass exhaust nozzle 18. The fan 23 is attached to and driven by the low pressure turbine 19 via shaft 26 and epicyclic gearbox 30.

The gas turbine engine 10 works in a conventional manner with air in the core airflow A being accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive the high pressure and low pressure turbines 17, 19 before being exhausted through the nozzle 20 to provide some propulsive thrust. The high pressure turbine 17 drives the high pressure compressor 15 by a suitable interconnecting shaft. The fan 23 generally provides the majority of the propulsive thrust. The epicyclic gearbox 30 is a reduction gearbox.

A known mechanical arrangement for a geared fan gas turbine engine 10 is shown in Figure 2. The low pressure turbine 19 drives the shaft 26, which is coupled to a sun wheel, or sun gear, 28 of the epicyclic gear arrangement 30. Radially outwardly of the sun gear 28 and intermeshing therewith, in a conventional manner, is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

The epicyclic gearbox 30 is of the planetary type, in that the planet carrier 34 rotates about the sun gear 28 and is coupled to an output shaft via linkages 36. In other applications the gearbox 30 may be a differential gearbox in which the ring gear 38 also rotates in the opposite sense and is coupled to a different output shaft via linkages 40.

An epicyclic gearbox 30 must be lubricated, by oil or another fluid. However, the oil becomes heated by being worked during operation of the epicyclic gearbox 30. Furthermore, the oil may accumulate particulate debris from the components of the epicyclic gearbox 30 which may cause seizing or other problems. It is therefore necessary to eject the oil efficiently from the epicyclic gearbox 30 to allow its replacement by spraying in fresh, cool oil. Ejection of the oil, particularly when it is collected for cleaning before being returned to the reservoir from which fresh oil is supplied, is referred to as oil scavenge.

A typical arrangement of the epicyclic gearbox is shown in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

Additionally or alternatively the gearbox may drive additional and/or alternative components (e.g. the intermediate pressure compressor and/or a booster compressor, propeller (aero or hydro), or electrical generator). Additionally or alternatively such engines may have an alternative number of compressors and/or turbines and/or an alternative number of interconnecting shafts.

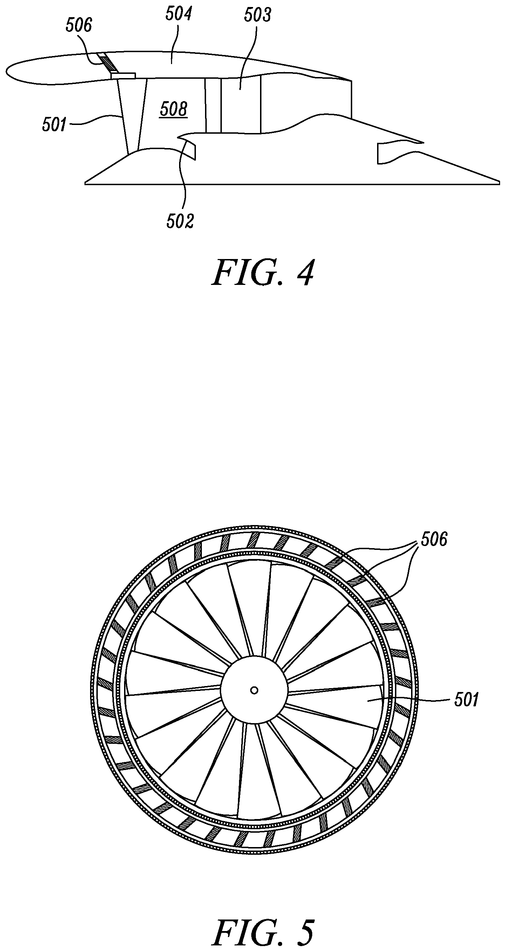

Figure 4 depicts a schematic of a ducted fan gas turbine engine having a Variable Pitch Fan (VPF) 501, an Outlet Guide Vane (OGV) 503 and an engine core splitter 502. These components are well known in the field of gas turbines so won't be discussed in detail with the exception that, as known in the art, the VPF may be rotated both around the axis of the engine and each blade forming the VPF may also be rotated around an individual blade axis to adjust its pitch and thus the aerodynamic function of the VPF.

In a first configuration of the fan blades the VPF generates substantially forward thrust directing air flow through a duct 508 bypassing the engine core. In a second configuration of the fan blades the VPF generates substantially reverse thrust.

A fan-tip flow channel 506 is provided in the vicinity of the fan-tips and preferably at the leading edge of the fan tip and is actuable between a closed and open position. In normal operation of the engine when thrust reverse is not required the flow channel is closed and is opened when thrust reverse is desired. In the open position the channel provides a path between the fan tip and the nacelle outer surface.

In the embodiment shown the flow channel 506 has a forward lean such that in use the air-flow within the channel during thrust reverse mode has both a forward component and a radial component. Whilst it is possible to dispense with the forward lean this will affect the impact of the flow channel on the thrust reverse performance of the engine.

The axial position of the channel inlet is preferably in the vicinity of the fan tip and preferably at the leading edge. However, improvements in the thrust reverse capabilities of the VPF over conventional architectures can be observed when the channel inlet is upstream of the OGV.

As seen in the cross-sectional view of Figure 5 looking from the front of the engine there are a plurality of flow channels 506 arranged around the circumference of the nacelle. In the embodiment shown the passages have a circumferential lean in the direction of rotation of the VPF in order to facilitate a smoother flow of air into each channel. It is possible to dispense with the circumferential lean or even angle the channels circumferentially in the opposite direction however this will affect the impact of the flow channel on the thrust reverse performance of the engine. Whilst each channel is shown to be spaced equally from an adjacent channel around the circumference it should be understood that the circumferential spacing may vary between channels.

In the embodiment of Figure 5 one or more vanes are provided within each flow-channel 506 to help direct the air during the thrust-reverse mode. Advantageously, the flow can be conditioned to reduce the amount of swirl on the exterior of the nacelle. During the aircraft landing run, the external reverse flow over the nacelle surface has a residual swirl component because the reverse stream develops through the rotating VPF passages and subsequently interacts with the free stream. This swirl can generate undesirable lateral airframe forces.

The vanes within the flow channel may also help define the structural integrity of the nacelle.

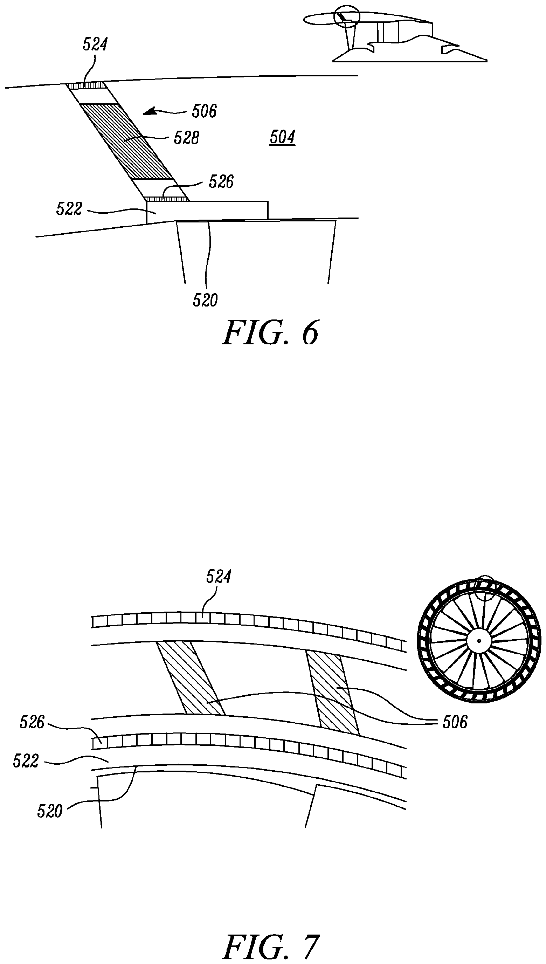

A more detailed view of one embodiment of the flow extraction channel design is shown with reference to Figures 6 and 7. In Figure 6, the front leading edge part of the fan shroud wall 520 is perforated to collect the flow in an annular chamber 522, located above a portion of the fan leading edge to avoid interference with the fan containment structure design. The design of the perforations and annular chamber may also be optimized for forward flow operation to manage off-design performance and acoustic requirements. The flow extraction channel 506 communicates with the nacelle external surface through the outer tab 724 and with the annular chamber 522 through the inner tab 526. The tabs 524 and 526 are closed during forward flow operation and are actuated into open positions, by either a retracting, swivel or any other mechanism, during the reverse flow operation. Since these actuators operate on thin tab sections, it will only require low power to actuate and their weight is minimal. Each tab, both inner and outer, may be operated as a unitary component. The actuator (not shown in the figure) can be located in the nacelle intake region away from the flow extraction channel, so as not to interfere with the containment structure design.

The extraction channel, being located near the fan leading edge, is angled leaning towards the nacelle intake and this may reduce constraints on the containment structure design in certain configurations of an engine. In Figure 6 the flow extraction channel is shown set at a 60° axial angle leaning towards the nacelle intake. The angle is shown for representative purposes and can be optimized based on reverse thrust and structural requirements to be of any suitable value. It is generally preferred that the axial angle be leaning towards the intake to maximize the reverse thrust component

Figure 7 shows the detailed front view of the extraction channel 506. The annular chamber 522 radially outside the fan leading edge, is fed by the perforated fan shroud wall 530. The tabs 524 and 526 are actuated to open position during the aircraft landing run to open the channel flow path. In the forward flow operation, the closed inner tab 804 prevents flow from entering the extraction channel, and causes the annular chamber 522 and the perforated shroud wall 520 to aid the forward flow behaviour of the fan.

The design of the aerofoil strut vane 528 in terms of the chord, flow deflection and profile definition may be optimized based on the flow swirl that need to be imparted to the channel flow and from structural integrity requirements. The flow channel extraction area can be optimized based on the reverse thrust requirements, with the typical preferred area being 10% of the fan inlet area. Based on the flow channel extraction area, the dimensions of the channel may also be calculated. The axial fan-relative placement of the porous shroud wall and the annular chamber, the depth of the annular chamber, and the perforation design of the porous wall may be optimized primarily from fan forward flow requirements. The reverse thrust behaviour is not significantly affected by these parameters, which provides considerable freedom for optimization of the geometry from forward flow considerations. The actuation and mechanical design schematics of the flow extraction channel may be finalized based on the space and packing requirements. Alternatively, it might also be possible that the inner tab 526 be removed and the entire flow channel actuation be driven by a blow-out door in the place of the outer tab 524

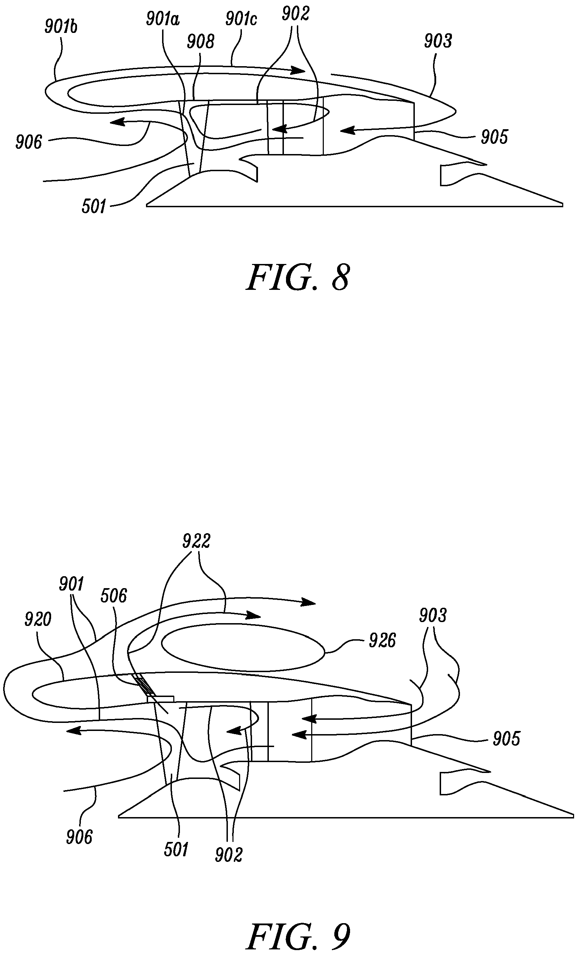

Figure 8 depicts the streamlines of the gas turbine engine operating in thrust reverse mode where the vents are either not present, or in their closed position. This provides a baseline configuration that will be used to explain some of the benefits of the claimed invention.

In the configuration of Figure 8, showing the engine operating in reverse flow mode, the reverse flow 901 is radially centrifuged outwards 901a towards the nacelle within the VPF 904 aerofoil passages, subsequently it flows forward 901b toward the nacelle intake and is washed down towards the engine exit by the free stream 901c.

A part of the radially centrifuged flow, turns back 902 and flows rearward towards the bypass nozzle exit 905. Although the turned back flow 902 eventually loses momentum and re-joins the reverse flow 903 developing from the bypass nozzle exit 905 it imposes an unfavourable pressure gradient and blockage to the development of reverse flow 903 into the engine.

The temperature of the flow 902 is higher than the free-stream flow of air outside the engine as it has picked up heat from the engine core. As it reverses forward and it is at a relative high temperature which can generate significant thermal stress on the bypass nozzle walls 908. The free stream air entrained by the reverse stream 901 at the nacelle intake is shown by 906.

The undesirable physical flow mechanisms in the baseline configuration are manipulated to improve the reverse thrust behaviour in the fan tip flow extraction embodiment as shown in Figure 9. As in the baseline configuration, the reverse flow 903 is ingested into the engine from the bypass exit 905 and develops towards the VPF passages. However, the radially centrifuged flow in the VPF passages 901, is now additionally extracted out to the engine external regions 920 through the extraction channel 506 as shown by flow-line 922. Since the centrifuged flow is pressurized within the rotating VPF, a large proportion of the flow 922 is extracted from the channel, which in turn reduces the amount of turned back flow 902 at the VPF outlet towards the bypass exit 904. Therefore, the turned back flow 902 has lower momentum in the modified design, and immediately rolls back to rejoin the reverse flow 903 from the bypass exit 905. The reduction in the extent occupied by the turned back flow 902 improves the back pressure to the reverse flow 903 development and consequently leads to an increase in the amount of reverse flow ingested from the bypass exit 905, as compared to the baseline configuration. The increased reverse flow 903, feeds the channel extracted flow 922, and the reverse flow 901 out of the VPF inlet towards the nacelle intake. The washed down reverse stream from the nacelle lip is lifted away from the nacelle external surface 920 by the channel extracted flow 922. Consequently, a large re-circulation region 926 is developed around the engine external surface. The re-circulation region increases the amount of slower moving fluid in the engine exit regions, which when impacted by the fan suction, further increases the amount of reverse flow 903 into the engine at the bypass exit 905.

The free stream entrained by the reverse flow out of the VPF inlet is shown by flow line 906. Additionally, the swirl imparted to the channel extracted flow 922 by the aerofoil strut vanes counteract the swirl in the washed down reverse stream from the nacelle lip and eliminates undesirable airframe lateral forces.

The combined effect of increased reverse stream mass flow and the additional drag because of the lift up of reverse flow streamlines with a large recirculation region, is observed to increase the airframe decelerating force by more than 30%. Moreover, since the reverse flow streamlines spread around the engine and have a particular nullifying swirl angle imparted by the aerofoil vane struts in the channel, the decelerating force does not have any undesirable lateral force component.

The lower volumes of the turned back flow 902 in the fan tip flow extraction design, reduces the temperature of the bypass nozzle wall structures and consequently improves the engine thermal state during the landing run.

The total area of the inlet to the flow channels is below 15% of the fan inlet area and preferably below 10% of the fan inlet area. At high relative areas a significant proportion of the inlet free stream flow will exit through the flow channels thereby reducing the blocking effect and the amount of the free stream air 906 turned back at the inlet. This is detrimental to the creation of thrust reverse air 903 entering the engine at the exhaust nozzle 905.

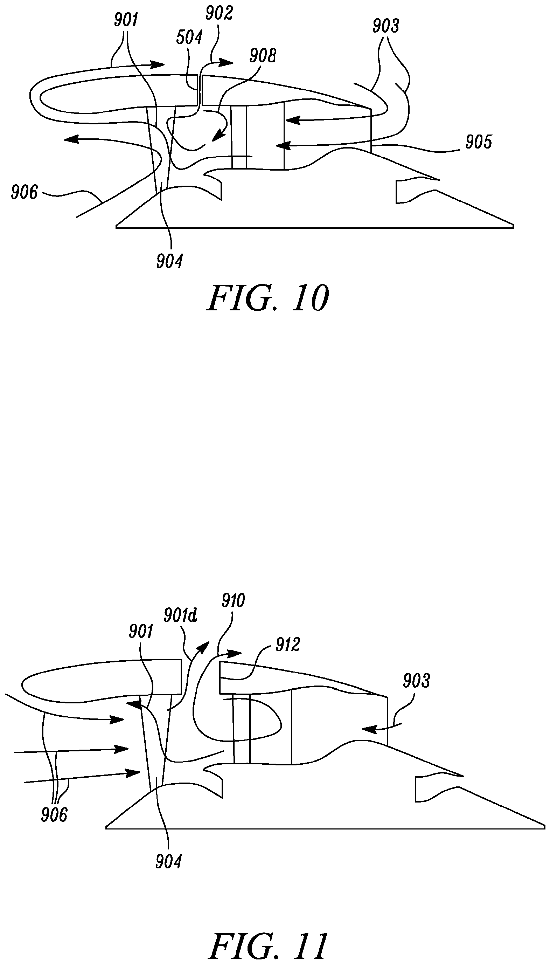

In the embodiment of Figure 10 the vent is provided forward of the guide vane and rearward of the fan. The reverse flow 901 is radially centrifuged outwards towards the nacelle within the VPF aerofoil passages before flowing forward toward the nacelle intake and is subsequently washed down towards the engine exit by the free stream.

Momentum reduction caused by the air exiting through the vent 904 means that the reverse air entering through the exhaust causes the rearward flow of air to occupy a reduced axial extent along the engine. This reduction in the momentum and reduced length of the recirculation region 908 presents a more favourable pressure gradient to the reverse flow entering the engine.

This facilitates an increase in the amount of reverse flow ingested from the bypass nozzle exit, as compared to a conventional configuration. Moreover, since the high temperature turned back flow 902 is vented out, the thermal state of the components in the bypass nozzle walls is less significant.

The total vent area is preferably less than 10% of the fan inlet area as at values above this number there may be a detrimental effect that offsets the hitherto assumed belief that openings downstream of the VPF would admit additional flow into the VPF and improve its reverse thrust behaviour.

As shown within the streamlines of Figure 11, at vent areas that are significantly greater than 10%, i.e. greater than 15%, a substantial proportion of the turned back flow portion 901d of the centrifuged reverse flow within the passages of the VPF escapes through the auxiliary vent openings 912. Therefore, only a very small amount of the centrifuged reverse flow with low momentum manages to flow out towards the nacelle intake 901. At forward speed conditions, the reverse stream flow towards the nacelle intake is completely suppressed by the free stream flow 906 entering the nacelle intake. The dominance of the free stream 906 in the nacelle intake further skews the pressure gradient in such a manner that more flow 901d escapes out through the auxiliary opening 912. The flow 901d escaping through the auxiliary opening entrains the reverse flow that has not reached the VPF passages 910 and causes it to also flow out through the vent.

The shear layer because of the escaping flows 901d and 910 through the auxiliary opening 912 prevents the VPF suction from being felt at the engine exit. Consequently, there is a large reduction in the reverse flow 903 entering into the engine at the bypass nozzle exit. Therefore, a combination of reduction in reverse flow out of the nacelle inlet and the reverse flow entering the bypass nozzle exit, significantly reduces the amount of reverse thrust achieved in the engine.

The claimed invention may also be applicable to two-shaft, or three-shaft non-geared turbine engines in addition to geared gas turbine engines.

It will be understood that the invention is not limited to the embodiments above-described and various modifications and improvements can be made without departing from the concepts described herein.

## Claims

1. A ducted gas turbine engine comprising a fan and a guide vane downstream of the fan,
wherein the fan is a Variable Pitch Fan (VPF) (501) configured to operate in a first position for generating forward thrust and a second position for generating reverse thrust;
wherein a duct wall (504) positioned radially outside the Variable Pitch Fan comprises one or more vents (506) extending through the duct wall, and **characterised in that**
each vent is located adjacent to, or downstream of the VPF and forward of the guide vane (503) and wherein the fan has an inlet area and the combined flow area of the vents is greater than 1% but no more than 15% of the fan inlet area.

2. A ducted gas turbine engine according to claim 2, wherein the VPF (501) is provided by a plurality of aerofoils circumferentially arranged around an axis and each aerofoil has a leading edge, a trailing edge and a blade tip with an axial extent, wherein the vent (506) has an opening (522) in the duct wall (504) that is located adjacent the VPF.

3. A ducted gas turbine engine according to claim 2, wherein the vent (506) has an opening (522) in the duct wall that is axially positioned adjacent the leading edge of the aerofoils.

4. A ducted gas turbine engine according to any preceding claim, wherein the combined flow area of the vents is no more than 10% of the fan inlet area.

5. A ducted gas turbine engine according to any preceding claim, wherein the vents (506) comprise an axially forward lean.

6. A ducted gas turbine engine according to any preceding claim, wherein the vents (506) comprise a circumferential lean.

7. A ducted gas turbine engine according to any preceding claim, wherein each vent comprises at least one valve member (524, 526) that is configured to move from an open position when the engine operates in thrust reverse mode and a closed position when the engine does not operate in thrust reverse mode.

8. A ducted gas turbine engine according to claim 7, wherein the at least one valve member is located at a radially inner surface of the duct wall.

9. A ducted gas turbine engine according to claim 7, wherein the at least one valve member is located at a radially outer surface of the duct wall.

10. A method of operating a ducted gas turbine engine according to any one of claims 1 to 9, the method comprising rotating the Variable Pitch Fan (VPF) whilst it is in its first configuration, and moving the Variable Pitch Fan to its second configuration.

11. A method according to claim 9, wherein in a first configuration the vents are closed and in the second configuration the vents are open and there is a flow of air therethrough.

## Patentansprüche

1. Kanalgasturbinentriebwerk, das einen Fan und eine Leitschaufel stromabwärts des Fans umfasst,
wobei der Fan ein Fan mit variablem Anstellwinkel (VPF) (501) ist, der konfiguriert ist, um in einer ersten Position zum Erzeugen von Vorwärtsschub und einer zweiten Position zum Erzeugen von Rückwärtsschub betrieben zu werden;
wobei eine Kanalwand (504), die radial außerhalb des Fans mit variablem Anstellwinkel positioniert ist, eine oder mehrere Entlüftungen (506) umfasst, die sich durch die Kanalwand erstrecken, und **dadurch gekennzeichnet, dass**
sich jede Entlüftung benachbart zu oder stromabwärts von dem VPF und vor der Leitschaufel (503) befindet, und wobei der Fan einen Einlassbereich aufweist und der kombinierte Strömungsbereich der Entlüftungen größer als 1%, aber nicht mehr als 15% des Faneinlassbereichs ist.

2. Kanalgasturbinentriebwerk nach Anspruch 2, wobei der VPF (501) durch eine Vielzahl von Tragflächen bereitgestellt ist, die umlaufend um eine Achse angeordnet ist, und jede Tragfläche eine Vorderkante, eine Hinterkante und eine Schaufelspitze mit einer axialen Erstreckung aufweist, wobei die Entlüftung (506) eine Öffnung (522) in der Kanalwand (504) aufweist, die sich benachbart zu dem VPF befindet.

3. Kanalgasturbinentriebwerk nach Anspruch 2, wobei die Entlüftung (506) eine Öffnung (522) in der Kanalwand aufweist, die axial benachbart zu der Vorderkante der Tragflächen positioniert ist.

4. Kanalgasturbinentriebwerk nach einem vorhergehenden Anspruch, wobei der kombinierte Strömungsbereich der Entlüftungen nicht mehr als 10% des Faneinlassbereichs ist.

5. Kanalgasturbinentriebwerk nach einem vorhergehenden Anspruch, wobei die Entlüftungen (506) eine axial vorwärtige Neigung umfassen.

6. Kanalgasturbinentriebwerk nach einem vorhergehenden Anspruch, wobei die Entlüftungen (506) eine umlaufende Neigung umfassen.

7. Kanalgasturbinentriebwerk nach einem vorhergehenden Anspruch, wobei jede Entlüftung zumindest ein Ventilelement (524, 526) umfasst, das konfiguriert ist, um sich von einer offenen Position zu bewegen, wenn das Triebwerk in Schubumkehrmodus betrieben wird, und einer geschlossenen Position, wenn das Triebwerk nicht in Schubumkehrmodus betrieben wird.

8. Kanalgasturbinentriebwerk nach Anspruch 7, wobei sich das zumindest eine Ventilelement an einer radial inneren Oberfläche der Kanalwand befindet.

9. Kanalgasturbinentriebwerk nach Anspruch 7, wobei sich das zumindest eine Ventilelement an einer radial äußeren Oberfläche der Kanalwand befindet.

10. Verfahren zum Betreiben eines Kanalgasturbinentriebwerks nach einem der Ansprüche 1 bis 9, wobei das Verfahren Drehen des Fans mit variablem Anstellwinkel (VPF), während er in seiner ersten Konfiguration ist, und Bewegen des Fans mit variablem Anstellwinkel zu seiner zweiten Konfiguration umfasst.

11. Verfahren nach Anspruch 9, wobei in einer ersten Konfiguration die Entlüftungen geschlossen sind und in der zweiten Konfiguration die Entlüftungen offen sind und es eine Luftströmung dort hindurch gibt.

## Revendications

1. Moteur à turbine à gaz caréné comprenant une soufflante et une aube directrice en aval de la soufflante,
dans lequel la soufflante est une soufflante à calage variable (VPF) (501) configurée pour fonctionner dans une première position pour générer une poussée vers l'avant et dans une seconde position pour générer une poussée inverse ;
dans lequel une paroi de conduit (504) positionnée radialement à l'extérieur de la soufflante à calage variable comprend un ou plusieurs évents (506) s'étendant à travers la paroi de conduit, et **caractérisé en ce que**
chaque évent est situé adjacent à ou en aval de la VPF et en avant de l'aube directrice (503) et dans lequel la soufflante comporte une surface d'entrée et la surface d'écoulement combinée des évents est supérieure à 1 % mais pas plus de 15 % de la surface d'entrée de la soufflante.

2. Moteur à turbine à gaz caréné selon la revendication 2, dans lequel la VPF (501) est fournie par une pluralité de profil aérodynamique disposés circonférentiellement autour d'un axe et chaque profil aérodynamique comporte un bord d'attaque, un bord de fuite et un bout d'aube avec une portée axiale, dans lequel l'évent (506) comporte une ouverture (522) dans la paroi de conduit (504) qui est située adjacente à la VPF.

3. Moteur à turbine à gaz caréné selon la revendication 2, dans lequel l'évent (506) comporte une ouverture (522) dans la paroi de conduit qui est positionnée axialement adjacente au bord d'attaque des profils aérodynamiques.

4. Moteur à turbine à gaz caréné selon l'une quelconque des revendications précédentes, dans lequel la surface d'écoulement combinée des évents ne dépasse pas 10 % de la surface d'entrée de soufflante.

5. Moteur à turbine à gaz caréné selon l'une quelconque des revendications précédentes, dans lequel les évents (506) comprennent une inclinaison axialement vers l'avant.

6. Moteur à turbine à gaz caréné selon l'une quelconque des revendications précédentes, dans lequel les évents (506) comprennent une inclinaison circonférentielle.

7. Moteur à turbine à gaz caréné selon l'une quelconque des revendications précédentes, dans lequel chaque évent comprend au moins un élément de soupape (524, 526) qui est configuré pour se déplacer depuis une position ouverte lorsque le moteur fonctionne en mode d'inversion de poussée et une position fermée lorsque le moteur ne fonctionne pas en mode d'inversion de poussée.

8. Moteur à turbine à gaz caréné selon la revendication 7, dans lequel l'au moins un élément de soupape est situé au niveau d'une surface radialement interne de la paroi de conduit.

9. Moteur à turbine à gaz caréné selon la revendication 7, dans lequel l'au moins un élément de soupape est situé au niveau d'une surface radialement externe de la paroi de conduit.

10. Procédé de fonctionnement d'un moteur à turbine à gaz caréné selon l'une quelconque des revendications 1 à 9, le procédé comprenant la rotation de la soufflante à calage variable (VPF) alors qu'elle est dans sa première configuration, et le déplacement de la soufflante à calage variable vers sa seconde configuration.

11. Procédé selon la revendication 9, dans lequel dans une première configuration les évents sont fermés et dans la seconde configuration les évents sont ouverts et un écoulement d'air existe à travers ceux-ci.
